# EUROPEAN PATENT APPLICATION

(11) **EP 0 549 022 A2**
(43) Date of publication of application: **30.06.1993**
(21) Application number: 92203771.8
(22) Date of filing: 04.12.1992
(51) Int. Cl.: C08G 18/28, C08G 18/48, C08G 18/68, C08G 18/40

(54) **Polymeric materials**

(30) Priority: 21.12.1991 GB 9127206
(71) Applicant: FMC CORPORATION (UK) LIMITED, Manchester M17 1WT (GB)
(72) Inventor: Macquarrie, Duncan James, CH-3904 Naters (CH)
(74) Representative: Hamilton, Raymond

(57) **Abstract**

A combustible polymeric material containing urethane linkages which has incorporated therein, as smoke and toxic gas suppressant, a polyester having an acid value below 30mg KOH/g derived from
(A) a polycarboxylic component comprising (A1) at least one aliphatic dicarboxylic acid having up to 6 carbon atoms which is unsaturated or is hydroxy-substituted, or an ester-forming derivative thereof and, optionally, one or more dicarboxylic or tricarboxylic acids or ester-forming derivatives thereof selected from (A2) a saturated aliphatic acid having 2 to 10 carbon atoms which is free from hydroxyl substituents, or ester-forming derivative thereof, (A3) citric acid or ester-forming derivative thereof, (A4) a cycloaliphatic acid having 7 to 12 carbon atoms or ester-forming derivative thereof and (A5) an aromatic acid having 8 to 16 carbon atoms or ester-forming derivative thereof, said polycarboxylic component being substantially free from tetracarboxylic acids or anhydrides thereof, and
(B) at least one polyhydroxyl component having 2 to 8 hydroxyl groups.

## Description

This invention relates to the suppression of smoke and toxic gases in the combustion of polymeric materials containing urethane linkages, particularly polyurethane and polyisocyanurate foams such as are used in furnishings, transport vehicles, decorations, insulation and building components.

Carboxylic acids are well known char-forming materials and have been proposed as smoke suppressant additives for polyurethane foams. However, acidic compounds react undesirably with compounds used in polyurethane manufacture and are very difficult to incorporate into a polyurethane foam, particularly a flexible polyurethane foam.

Esters of polycarboxylic acids are described in EP 0075424 as smoke suppressant additives for polyurethane foams, but only when used in conjunction with other additives. Moreover, esters of polycarboxylic acids with simple monohydric alcohols do not reduce smoke evolution on combustion of the foam.

According to U.S. 4966920 and GB 2234253, polyesters having low acid values can be used as smoke and toxic gas suppressant additives for polyurethane foam, but they must be derived from tetracarboxylic acids or their anhydrides, preferably aromatic tetracarboxylic acids or their anhydrides. Furthermore, low acid value polyester reaction products of saturated aliphatic or aromatic dicarboxylic acids with polyhydric alcohols are unsuitable as additives for polyurethane foam because they have a deleterious effect on the properties of the foam-forming mixture, rendering foam production very difficult.

Surprisingly, it has now been determined that polyesters based on aliphatic unsaturated or hydroxy-substituted dicarboxylic acids exhibit very good activity as smoke and toxic gas suppressant additives for combustible materials containing urethane linkages, particularly polyurethane foams. These polyesters have a suitable level of reactivity in foam-forming mixtures and facilitate the production of high quality foams with consistent physical properties.

Accordingly, the present invention provides in one aspect a combustible polymeric material containing urethane linkages which has incorporated therein, as smoke and toxic gas suppressant, a polyester having an acid value below 30 mg KOH/g derived from
(A) a polycarboxylic component comprising (A1) at least one aliphatic dicarboxylic acid having up to 6 carbon atoms which is unsaturated or is hydroxy-substituted, or an ester-forming derivative thereof and, optionally, one or more dicarboxylic or tricarboxylic acids or ester-forming derivatives thereof selected from (A2) a saturated aliphatic acid having 2 to 10 carbon atoms which is free from hydroxyl substituents, or ester-forming derivative thereof, (A3) citric acid or ester-forming derivative thereof, (A4) a cycloaliphatic acid having 7 to 12 carbon atoms or ester-forming derivative thereof and (A5) an aromatic acid having 8 to 16 carbon atoms or ester-forming derivative thereof, said polycarboxylic component being substantially free from tetracarboxylic acids or anhydrides thereof, and
(B) at least one polyhydroxyl component having 2 to 8 hydroxyl groups.

In another aspect, the present invention provides the use of a polyester having an acid value below 30mg KOH/g derived from (A) and (B) as hereinbefore defined as a smoke and toxic gas suppressant for a combustible material containing urethane linkages.

The polyester derived from (A) and (B) as hereinbefore defined preferably has an acid value below 20 mg KOH/g, especially below 10 mg KOH/g.

Aliphatic dicarboxylic acids suitable for use as (A1) include those containing an ethylenic double bond and those containing one or two hydroxy substituents. Examples of acids (A1) are maleic acid, fumatic acid, itaconic acid, methylene glutaric acid, citraconic acid, chloromaleic acid, dichloromaleic acid, chlorofumaric acid, hydroxymalonic acid, dihydroxymalonic acid, malic acid, tartaric acid, hydroxyglutaric acids and dihydroxytartaric acid. Examples of ester-forming derivatives of these acids are anhydrides (where they exist), acid chlorides and C₁-C₄ alkyl esters thereof, such as maleic anhydride, fumaroyl chloride, dimethyl maleate, diethyl tartrate and dibutyl tartrate. Preferred acids (Al) are C₂-C₄ acids, more preferably fumaric acid, malic acid, tartaric acid and, especially, maleic acid. Preferred ester-forming derivatives are anhydrides (where they exist) and dimethyl esters. In especially preferred embodiments, (A1) is maleic anhydride, fumaric acid or malic acid.

Examples of saturated hydroxyl-free acids (A2) are oxalic acid, malonic acid, succinic acid, glutaric acid, adipic acid, commercial mixtures of dicarboxylic acids such as AGS (mixtures of adipic, glutaric and succinic acids), pimelic acid, azelaic acid, sebacic acid, methylmalonic acids, dimethylmalonic acid, methylsuccinic acid, dimethylsuccinic acids, tetramethylsuccinic acid, methylglutaric acids, dimethylglutaric acids, methyladipic acids, bromomalonic acid, dibromomalonic acid, chloromalonic acid, bromosuccinic acid, dibromosuccinic acid, or tricarballylic acid. Examples of ester-forming derivative of these acids are anhydrides (where they exist), acid chlorides and C₁-C₄ alkyl esters thereof. Preferred acids (A2) are dicarboxylic, preferably C₂-C₆, acids, more preferably succinic acid, glutaric acid and, especially, adipic acid, and mixtures of two or more thereof. Preferred ester-forming derivatives are the anhydrides and dimethyl esters.

Cycloaliphatic acids suitable as (A4) include saturated and unsaturated dicarboxylic and tricarboxylic acids. Examples of acids (A4) are cyclopentane dicarboxylic and tricarboxylic acids, cyclohexane dicarboxylic and tricarboxylic acids, cyclohexene dicarboxylic and tricarboxylic acids, cyclopentanone - and cyclohexanone - dicarboxylic and tricarboxylic acids. Preferred acids (A4) are C₇ to C₉ dicarboxylic acids, more preferably hexahydrophthalic acid, methyltetrahydrophthalic acid and, especially, tetrahydrophthalic acid. Examples of ester-forming derivatives of the acids (A4) are the anhydrides (where they exist), acid chlorides and C₁-C₄ alkyl esters thereof. Preferred ester-forming derivatives are the anhydrides and dimethyl esters.

Aromatic acids suitable as (A5) may be acids having two or three carboxyl groups attached to a benzene or naphthalene ring. Examples of acids (A5) are phthalic acid, isophthalic acid, terephthalic acid, napthalene 1, 4- dicarboxylic acid, napthalene 1,8-dicarboxylic acid, trimellitic acid, trimesic acid, benzophenone dicarboxylic acids, and halogen- or C₁-C₄-alkyl substituted derivatives of these acids such as bromophthalic acids, chlorophthalic acids, bromoterephthalic acids, 3,5,6-tribromotrimellitic acid and 5-methylisophthalic acid. Examples of ester-forming derivatives of these acids are the anhydrides (where they exist), acid chlorides and C₁-C₄ alkyl esters. Preferred acids (A5) are phthalic, isophthalic and terephthalic acids. Preferred ester-forming derivatives are anhydrides and dimethyl esters.

In preferred embodiments of the invention, the polycarboxylic component (A) of the polyester smoke and toxic gas suppressant is an acid (Al) or ester-forming derivative thereof as hereinbefore described or a mixture thereof with an acid (A2) or ester-forming derivative thereof as hereinbefore described.

In especially preferred embodiments of the invention, the polycarboxylic component (A) of the polyester is maleic acid, maleic anhydride, a mixture of maleic acid or maleic anhydride with adipic acid, a mixture of fumaric acid with adipic acid or a mixture of malic acid with adipic acid.

The polyhydroxyl component (B) from which the polyester is derived may be aliphatic, cycloaliphatic or aromatic. It may be, for example, an aliphatic polyhydric alcohol having 2 to 80 carbon atoms and 2 to 4 hydroxyl groups, or a cycloaliphatic polyhydric alcohol having 6 to l0 carbon atoms and 2 to 6 hydroxyl groups. Examples of suitable aliphatic components (B) are alkylene glycols such as ethylene glycol, 1,2-propylene glycol, 1,3-propylene glycol, 1,4-butanediol, neopentyl glycol, dibromoneopentyl glycol, 1,6-hexanediol, 1,8-octanediol, 1,10-decanediol and 1,12-dodecanediol; oxyalkylene glycols such as diethylene glycol, dipropylene glycol, triethylene glycol, tripropylene glycol and higher polyethylene glycols and polypropylene glycols such as those available commercially as polyethylene glycol 200, polyethylene glycol 400, polethylene glycol 1000, polypropylene gycol 425 and polypropylene glycol 1000; triols such as glycerol, 1,1,1-trimethylolpropane, 1,2,4-butanetriol and adducts thereof with ethylene oxide or propylene oxide; higher functional polyhydric alcohols such as pentaerythritol, xylitol, sorbitol and their adducts with ethylene oxide or propylene oxide; and mixtures of two or more of these aliphatic polyhydric alcohols.

Examples of suitable cycloaliphatic components (B) are dihydroxycyclohexanes and cyclohexanes or cyclohexanones having two or more hydroxyalkyl substituents such as 1,2-bishydroxymethylcyclohexane, 1,4-bishydroxymethylcyclohexane, 1,2,2,6,6-pentahydroxymethylcyclohexane and 2,2,6,6-tetrahydroxymethylcyclohexanone, and mixtures of two or more thereof.

Aromatic polyhydroxyl components (C) may be polyhydric phenols such as catechol, resorcinol, hydroquinone, dihydroxynaphthalenes, dihydroxyanthraquinones, bis(4-hydroxyphenyl)methane, 2,2-bis(4-hydroxyphenyl)propane and dihydroxybenzophenones; or polyhydric alcohols, usually compounds having 2 or more hydroxymethyl substituents attached to an aromatic ring, such as 1,2-, 1,3- or 1,4-dihydroxymethylbenzene, 1,3,5-trimethylolbenzene, or diphenyl-4,4¹-dimethanol, or adducts of these hydroxymethyl compounds or of polyhydric phenols with ethylene oxide or propylene oxide, such as 2,2-bis(p-(2-hydroxyethoxylphenyl)propane, or mixtures of two or more thereof.

Preferred amongst the abovementioned polyhydroxyl components (B) are alkylene glycols having 2 to 6 carbon atoms, oxyethylene glycols of formula HO-(CH₂CH₂O-)ₘCH₂CH₂OH where m is 1 to 30, oxypropylene glycols of formula HO-(CH(CH₃)CH₂O-)ₙCH₂CH(CH₃)OH where n is 1 to 30, and mixtures of two or more thereof. More preferred are alkylene glycols having 2 to 4 carbon atoms and oxyethylene glycols of formula HO-(CH₂CH₂O-)ₘCH₂CH₂OH where m is 1 to 10. Especially preferred polyhydroxyl components (B) are ethylene glycol and diethylene glycol.

Polyesters derived from (i) maleic anhydride and ethylene glycol, (ii) maleic anhydride, adipic acid and ethylene glycol, (iii) fumaric acid, adipic acid and ethylene glycol, and (iv) malic acid, adipic acid and diethylene glycol are especially preferred smoke and toxic gas suppressants in accordance with the invention.

The polyesters may be prepared by reacting the polycarboxylic component (A) with the polyhydroxyl component (B) using conventional procedures, for example by reaction at 20 to 300°C using an inert solvent, for example a hydrocarbon such as xylene, an ether such as tetrahydrofuran or a ketone such as methyl ethyl ketone. The reaction may be carried out in the presence of a catalyst such as an alkoxide of tin or titanium, a tertiary amine such as triethylenediamine, an N-alkylimidazole such as N-methylimidazole, an organophosphine such as triphenylphosphine, a sulphonic acid such as p-toluenesulphonic acid or other known polyesterification catalyst. If desired, a monohydric alcohol, a monobasic acid, a monobasic acid chloride or a monobasic acid anhydride may be used as a chain terminator in a conventional manner.

Combustible polymeric materials of the invention are conveniently produced by reacting an organic polyol with an organic polyisocyanate in the presence of a smoke and toxic gas suppressant polyester derived from (A) and (B) as hereinbefore described. The polyester may be used in an amount of 5 to 100%, for example 10 to 50%, preferably 10 to 30% by weight of the polyol. The polyol and polyisocyanate may be chosen from those conventionally used in the preparation of polyurethanes and polyisocyanurates according to the nature of the required product. The smoke and toxic gas suppressant polyester is particularly useful where the combustible material is a polyurethane foam, especially a flexible polyurethane foam such as is used in upholstered furniture and mattresses. Polyols, polyisocyanates and other materials useful in the preparation of such foams are well known to those skilled in the art. Generally, polyols used in the preparation of flexible polyurethane or polyisocyanurate foams are polyoxyalkylene polyols, such as those hereinbefore mentioned as the polyhydroxyl component of the polyester, which are widely available commercially. Organic polyisocyanates which can be reacted with the polyol to produce a polyurethane or polyisocyanurate may be aliphatic compounds such as hexamethylene diisocyanate, cycloaliphatic compounds such as cyclohexane-1,4-diisocyanate and methylcyclohexane-2,4-diisocyanate or aromatic compounds such as 2,4- and 2,6-toluenediisocyanates, 4,4¹-diphenylmethane diisocyanate and polymethylene polyphenylene polyisocyanates. Suitable polyisocyanates are widely available commercially. A commercial mixture of 2,4-and 2,6-toluenediisocyanates (TDI) is particularly convenient.

In the preparation of foams, a blowing agent is included in the polyurethane- or polyisocyanurate - forming mixture of polyol, polyisocyanate and polyester. Suitable blowing agents are well known to those skilled in the art; they include water and low-boiling halohydrocarbons such as methylene chloride, trichlorofluoromethane, dichlorodifluoromethane, dichlorodifluoroethane, 1,1-dichloro-1-fluoroethane, hexafluorocyclobutane and octafluorocyclobutane.

Other ingredients of a polyurethane- or polyisocyanurate foam-forming mixture may be catalysts for the polyol-polyisocyanate reaction, for example a tin compound such as stannous octoate, dibutyl tin diacetate or dibutyl tin dilaurate, a tertiary amine such as triethylamine, tri-n-butylamine, tri-n-octylamine, N,N,N¹,N¹-tetramethylethylenediamine, N,N,N¹N¹-tetramethyl-1,3-butanediamine, triethanolamine, N,N-dimethylethanolamine, N,N-diethylethanolamine, triisopropanolamine, N-methyldiethanolamine, N,N¹-dimethylcyclohexylamine, methyldicyclohexylamine, N-methylmorpholine, N-ethylmorpholine, N-octadecylmorpholine, triethylenediamine (i.e. 1,4-diazobicyclo[2.2.2 octane]) or N,N-dimethylbenzylamine, or a mixture of the tin compound and the tertiary amine; and, in the case of a polyisocyanurate foam-forming mixture, a catalyst for the trimerisation of isocyanates, for example a mixture of a tertiary aminophenol such as 2,4,6-tris(dimethylaminomethyl)phenol and an alkali metal carboxylate such as potassium 2-ethylhexanoate.

The foam-forming mixture may also include one or more surfactants such as substituted nonylphenols, fatty acid/ethylene oxide condensates, alkylene oxide block copolymers or silicon-containing materials such as poly(dimethylsiloxanes) (silicones), poly(phenylmethylsiloxanes) or poly(dimethylsiloxane) - polyoxyalkylene graft copolymers; one or more fire retardants such as hydrated aluminas, magnesium hydroxide, halogen - and/or phosphorus- containing compounds, for example, chloroalkyl phosphates and phosphonates, triaryl phosphates and metal salts of phosphonic acids, antimony oxides, boron compounds e.g. borax, graphite e.g. exfoliated graphite, ceramics, melamine or melamine derivatives, e.g. melamine salts including melamine borate, melamine cyanurate, dimelamine phosphate, melamine phosphonates, melamine sulphonates and melamine carboxylates such as melamine phthalate, melamine stearate and melamine oxalate; one or more intumescing agents such as ammonium polyphosphates; and one or more other smoke and toxic gas suppressants, for example one or more of the polyesters described in US 4966920 or GB 2234253.

It will be understood that since the smoke and toxic gas suppressant polyester derived from (A) and (B) as hereinbefore described has a low acid value, it contains hydroxyl groups which can react with the polyisocyanate in the preparation of the polyurethane or polyisocyanurate. The polyester may therefore be present in the product as a polyesterpolyurethane. To allow for this, the polyisocyanate is normally used in amount to provide sufficient isocyanate equivalents to react with the polyol and with hydroxyl groups in the polyester.

Polyurethane foams and polyisocyanurate foams of the invention may be used in a wide variety of products such as chairs, settees, stools and various other forms of seating, matresses, cushions, pillows, foam backing for carpets, curtains and textile composites as well as foams for thermal and sound insulations. In such applications they will often be used in composites or assemblies with a wide range of other materials including natural and synthetic textiles, for example leather, cotton, wool, polyester, polyamide, acrylic, polyvinylchloride, polypropylene, viscose velour, supplementary padding, interlinings, webbing, barriers and other various materials of construction such as wood, metals, plastics, plasterboard, glass fibres etc. In addition other measures to reduce flammabilitiy, smoke and toxic gas evolution may also be included such as of interliners, barrier foams and flame retarded textiles.

The invention is illustrated by the following Examples, in which parts are by weight unless indicated otherwise.

### Example 1

Maleic anhydride (73.5g, 0.75 mol), ethylene glycol (279g, 4.5 mol) and dibutyltin oxide (0.3g) are charged to a reaction vessel. The mixture is stirred efficiently and heated to 200°C. It is maintained at this temperature and water of condensation is removed by distillation from the reaction mass at a head temperature of l00°C. The progress of the reaction is monitored by acid value determinations at intervals. When the acid value is less than 5 mg KOH/g, excess ethylene glycol is removed under reduced pressure to give 164.3g of a polyester, having a final acid value of 3.9 mg KOH/g, as a viscous yellow oil.

### Examples 2-5

The procedure of Example 1 is repeated using the reactants shown in Table 1. Where a mixture of acids and/or anhydrides is shown, a 1:1 molar mixture is used. In Example 5, 2-methoxyethoxyethanol is added to the reaction mixture as chain terminator, the weight ratio of ethylene glycol to 2-methoxyethoxyethanol being 1.23:1.

**Table 1**

| Example | Reaction Components | | Polyester Acid Value (mg KOH/g) |
|---|---|---|---|
| | (A) | (B) | |
| 2 | MAn + AA | EG | 4.3 |
| 3 | FA + AA | EG | 6.1 |
| 4 | MaA + AA | DEG | 2.2 |
| 5 | MAn + AA | EG | 2.5 |
| MAn = maleic anhydride AA = adipic acid FA = fumaric acid MaA = malic acid EG = ethylene glycol DEG = diethylene glycol | | | |

The effectiveness of the polyesters of Examples 1 to 5 in reducing the amounts of smoke and toxic gas from burning flexible polyurethane foam is illustrated by the following Examples.

### Example 6

A flexible polyurethane foam is prepared using the following formulation:

| | Parts |
|---|---|
| Polyether polyol¹ | 100.00 |
| Water | 4.7 |
| N,N-dimethylethanolamine | 0.4 |
| Stannous octoate | 0.25 |
| Silicone surfactant² | 1.0 |
| Toluene diisocyanate (80:20 TDI) | 55.5 |

| | |
|---|---|
| ¹Caradol 48/2 ex Shell Chemicals | |
| ²Polyurax SC 246 ex BP Chemicals | |

The polyol, water, N, N-dimethylethanolamine and silicone surfactant are blended together using a four-bladed impeller at 2000rpm. The stannous octoate is added and stirred for five seconds. Finally the preweighed TDI is added rapidly. The mixture is blended for 5 seconds and then poured into a mould. The foam is allowed to rise and is then stored for 24 hours at 23°C and 50% relative humidity.

The foam is cut into cubes weighing 5g (±0.2g) and the amount of smoke produced on burning is measured as follows using a standard Aminco NBS Smoke Chamber described in ASTM E662 but using a modified test procedure. The foam sample is placed on a wire gauze supported on a tripod within the smoke chamber and ignited with a match. Each foam sample is tested in triplicate. The mean specific optical density is calculated at times of one minute (Dl), two minutes (D2), and three minutes (D3) from the time of ignition. The mean maximum specific optical density corrected for soot deposition on the lenses [Dmax (corr)] is also recorded. The results are given in Table 2.

### Example 7-11

Samples of flexible polyurethane foam containing the polyesters of Example l to 5 are prepared using the method of Example 6, with the appropriate amount of polyester being added to the mixture prior to the addition of the stannous octoate and TDI. The amounts used are shown in Table 2 as parts per hundred parts of polyol (php).

Although the polyesters can be used without the need for any substantial changes to this formulation, those skilled in the art will appreciate that small modifications e.g. to the levels of the components, may be made to control the properties of the foam produced.

Samples of the resulting foam are prepared and tested following the procedure described in Example 6. The values of optical density thus obtained are given in Table 2.

**Table 2**

| Example | Product of Example | Amount (php) | D1 | D2 | D3 | Dmax(corr) |
|---|---|---|---|---|---|---|
| 6 | - | 0 | 87 | 87 | 87 | 84 |
| 7 | 1 | 30 | 6 | 37 | 47 | 53 |
| 8 | 2 | 30 | 9 | 39 | 53 | 49 |
| 9 | 3 | 30 | 22 | 51 | 59 | 59 |
| 10 | 4 | 30 | 20 | 62 | 67 | 57 |
| 11 | 5 | 30 | 36 | 48 | 53 | 63 |

The results given in Table 2 show that incorporation of the polyesters of the invention into the flexible polyurethane foam (Examples 7-11) reduces the total amount of smoke formed during combustion compared to the untreated foam (Example 6) as measured by Dmax(corr). Additionally, the polyesters have the effect of significantly reducing the rate at which the smoke is produced as measured by the values of optical density after 1, 2 and 3 minutes (D1, D2 and D3).

### Examples 12-13

Blocks of polyurethane foam are prepared using the formulations of Example 6 (Control) and Example 8. The blocks, having dimensions 100mm x 100mm x 35mm, are covered with a flame retardant cotton fabric and burnt in a cone calorimeter using a 35 kw/m² radiant heat source, according to ISO/DIS 5660 procedure. The results are shown in Table 3, where the volume of smoke evolved is expressed as the volume for an optical density (D) per metre value of 1, and the Smoke Parameter is the product of the maximum rate of heat release and the test average specific extinction area.

**Table 3**

| Example | Foam | Total Smoke (m3for D/m=1) | Specific Extinction (Area (m2/kg) | | Smoke Parameter |
|---|---|---|---|---|---|
| | | | 1 min | 3 min | |
| 12 | Control | 0.93 | 160 | 100 | 27100 |
| 13 | Example 8 | 0.64 | 112 | 83 | 22100 |

The results shown in Table 3 confirm that incorporation of the polyesters into flexible polyurethane foam significantly reduces the amount of smoke evolved during combusion.

## Claims

**1.** A combustible polymeric material containing urethane linkages which has incorporated therein, as smoke and toxic gas suppressant, a polyester having an acid value below 30mg KOH/g derived from
(A) a polycarboxylic component comprising (Al) at least one aliphatic dicarboxylic acid having up to 6 carbon atoms which is unsaturated or is hydroxy-substituted, or an ester-forming derivative thereof and, optionally, one or more dicarboxylic or tricarboxylic acids or ester-forming derivatives thereof selected from (A2) a saturated aliphatic acid having 2 to 10 carbon atoms which is free from hydroxyl substituents, or ester-forming derivative thereof, (A3) citric acid or ester-forming derivative thereof, (A4) a cycloaliphatic acid having 7 to 12 carbon atoms or ester-forming derivative thereof and (A5) an aromatic acid having 8 to 16 carbon atoms or ester-forming derivative thereof, said polycarboxylic component being substantially free from tetracarboxylic acids or anhydrides thereof, and
(B) at least one polyhydroxyl component having 2 to 8 hydroxyl groups.

**2.** A polymeric material according to claim 1 characterized in that the polyester has an acid value below 10mg KOH/g.

**3.** A polymeric material according to claim 1 or 2, characterized in that (A1) is fumaric acid, malic acid, tartaric acid or maleic acid, or an ester-forming derivative thereof.

**4.** A polymeric material according to claim 3, characterized in that the ester-forming derivative is an anhydride or methyl ester.

**5.** A polymeric material according to claim 4, characterized in that (Al) is maleic anhydride, fumaric acid or malic acid.

**6.** A polymeric material according to any of the preceding claims, characterized in that (A2) is a saturated dicarboxylic acid or an ester-forming derivative thereof.

**7.** A polymeric material according to claim 6, characterized in that the saturated dicarboxylic acid is a C₂-C₆ dicarboxylic acid.

**8.** A polymeric material according to claim 7, characterized in that the saturated dicarboxylic acid is succinic acid, glutaric acid or adipic acid.

**9.** A polymeric material according to any of the preceding claims, characterized in that (A4) is a C₇ to C₉ dicarboxylic acid or an ester-forming derivative thereof.

**10.** A polymeric material according to claim 9, characterized in that the C₇ to C₉ dicarboxylic acid is tetrahydrophthalic acid.

**11.** A polymeric material according to any of the preceding claims, characterized in that (A5) is phthalic acid, isophthalic acid or terephthalic acid or an ester-forming derivative thereof.

**12.** A polymeric material according to claim 1 or 2, characterized in that the polycarboxylic component (A) of the polyester is (A1) as defined in any of claims 1 and 3 to 5 or a mixture thereof with (A2) as defined in any of claims 1 and 6 to 8.

**13.** A combustible polymeric material containing urethane linkages which has incorporated therein, as smoke and toxic gas suppressant, a polyester having an acid value below 30 mg KOH/g derived from
(A) a polycarboxylic component which is maleic acid, maleic anhydride, a mixture of maleic acid or anhydride with adipic acid, a mixture of fumaric acid with adipic acid or a mixture of malic acid with adipic acid, and
(B) a polyhydroxyl component having 2-8 hydroxyl groups.

**14.** A polymeric material according to any of the preceding claims, characterized in that the polyhydroxyl component (B) is an alkylene glycol having 2 to 6 carbon atoms, an oxyethylene glycol of formula HO-(CH₂CH₂O-)ₘCH₂CH₂OH where m is 1 to 50, an oxypropylene glycol of formula HO-(CH(CH₃)CH₂O-)ₙCH₂CH(CH₃)OH where n is 1 to 50, or a mixture of two or more thereof.

**15.** A polymeric material according to claim 14, characterized in that (B) is an alkylene glycol having 2 to 4 carbon atoms or an oxyethylene glycol of formula HO-(CH₂CH₂O-)ₘCH₂CH₂OH where m is 1 to 10.

**16.** A polymeric material according to claim 15, characterized in that (B) is ethylene glycol or diethylene glycol.

**17.** A polymeric material according to any of the preceding claims, characterized in that the polyester is derived from (i) maleic anhydride and ethylene glycol, or (ii) maleic anhydride, adipic acid and ethylene glycol, or (iii) fumaric acid, adipic acid and ethylene glycol, or (iv) malic acid, adipic acid and diethylene glycol.

**18.** A polymeric material according to any of the preceding claims, characterized in that the polyester is a reaction product of (A) and (B) in the presence, as chain terminator, of a monohydric alcohol, monobasic acid or an acid chloride or anhydride thereof.

**19.** A polymeric material according to any of the preceding claims, which is characterized by reacting an organic polyol with an organic polyisocyanate in the presence, as smoke and toxic gas suppressant, of said polyester.

**20.** A polymeric material according to claim 19, characterized in that the polyester is present in an amount of 5 to 100% by weight of the polyol.

**21.** A polymeric material according to claim 19 or 20, characterized in that the polyisocyanate is used in an amount sufficient to react with the polyol and with hydroxyl groups in the polyester.

**22.** A polymeric material according to claim 21, which is flexible foam.

**24.** Use of a polyester as defined in any of claims 1 to 18 as a smoke and toxic gas suppressant for a combustible polymeric material containing urethane linkages.
